# EUROPÄISCHE PATENTSCHRIFT

(11) **EP 3 639 652 B1**
(45) Veröffentlichungstag und Bekanntmachung des Hinweises auf die Patenterteilung: **15.09.2021**
(21) Anmeldenummer: 19190199.0
(22) Anmeldetag: 06.08.2019
(51) Int. Cl.: A01G 23/00, B62D 63/08, B60K 17/28, B60K 25/06

(54) **FORSTANHÄNGER**
FOREST TRAILER
REMORQUE FORESTIÈRE

(30) Priorität: 17.10.2018 DE 102018125725
(43) Veröffentlichungstag der Anmeldung: 22.04.2020
(73) Patentinhaber: Pfanzelt Maschinenbau GmbH, 87675 Rettenbach a. A. (DE)
(72) Erfinder: PFANZELT, Paul, 87675 Rettenbach a. A. (DE)
(74) Vertreter: Tetzner, Michael

(56) Entgegenhaltungen:
- EP-A1- 3 332 995
- WO-A1-86/04310
- DE-B4-102009 029 037
- DE-U1-202007 006 610
- JP-A- H0 748 815
- US-A- 2 896 734

## Beschreibung

Die Erfindung betrifft einen Forstanhänger mit einer sich von einer Anhängerkupplung bis zu einem Drehlager erstreckenden Lenkdeichsel sowie einer über eine Gelenkwelle mit einem Zugfahrzeug koppelbaren Hydraulikpumpe.

Weiterhin ist ein Steuerblock zur Steuerung wenigstens eines hydraulisch betriebenen Aggregats und ein mit der Hydraulikpumpe und dem Steuerblock in Verbindung stehendender Hydrauliktank vorgesehen. Ein solcher Forstanhänger kann beispielsweise als sogenannter Rückeanhänger ausgebildet sein, der einen Ladekran umfasst, mit den Baumstämme und Äste in einem Ladebereich des Rückeanhängers abgelegt werden können.

Aus der DE 10 2009 029 037 B4 ist ein Forstanhänger mit einer Lenkdeichsel bekannt, wobei die Hydraulikpumpe in einem hohl ausgebildeten Abschnitt der Lenkdeichsel angeordnet ist. Durch diese Anordnung der Hydraulikpumpe ist diese vor Beschädigungen durch Unterlenker, Oberlenker und durch herabfallendes Geäst geschützt. Ein weiterer Vorteil besteht auch darin, dass die an die Hydraulikpumpe angeschlossenen Saug- bzw. Druckleitungen geschützt innerhalb der Deichsel geführt werden können.

Der Erfindung liegt nun die Aufgabe zugrunde, die Betriebssicherheit weiter zu verbessern, um den Bediener vor Leckagen zu schützen. So stellt austretendes Öl, insbesondere aus unter Druck stehenden Hydraulikleitungen eine ernsthafte gesundheitliche Gefahr für den Bediener dar. Die Hydraulikleitungen werden daher üblicherweise zusätzlich mit einer Schutzummantelung versehen.

Erfindungsgemäß wird die Aufgabe durch einen Forstanhänger gemäß den Merkmalen des Anspruches 1 gelöst, wobei die Hydraulikpumpe, der Steuerblock und der Hydrauliktank an oder in der Lenkdeichsel angeordnet sind, sodass die Hydraulikpumpe, der Steuerblock und der Hydrauliktank auch bei einem Lenkeinschlag der Lenkdeichsel um das Drehlager relativ zueinander ortsfest angeordnet sind.

Bisher wurde der Hydrauliktank bei Forstanhängern immer im Bereich des eigentlichen Anhängers, d. h. in Fahrtrichtung hinter dem Drehlager der Lenkdeichsel angeordnet. Dies hat aber den entscheidenden Nachteil, dass die Hydraulikleitungen zwischen dem Hydrauliktank und der Hydraulikpumpe sowie dem Steuerblock bei einem Lenkeinschlag der Lenkdeichsel beansprucht werden, um die Relativbewegung zwischen Hydrauliktank, Hydraulikpumpe und Steuerblock auszugleichen. Jede Relativbewegung wirkt sich jedoch negativ auf die Lebensdauer der Hydraulikschläuche aus. Außerdem stellt jede Relativbewegung eine potenzielle Gefahr für eine Beschädigung dar. Um eine Leckage zu vermeiden, sind daher derartige Hydraulikschläuche in bestimmten Zeitintervallen auszutauschen, was mit zusätzlichen Kosten verbunden ist.

Es ist natürlich auch bekannt, dass man die Pumpe und den Hydrauliktank im Bereich des Anhängers anordnet, jedoch gestaltet sich dann der Antriebstrang vom Zugfahrzeug zur Hydraulikpumpe als wesentlich aufwendiger, da dieser mehrgelenkig ausgebildet werden muss, um die Lenkbeweglichkeit der Lenkdeichsel ausgleichen zu können. Bei der erfindungsgemäßen Anordnung, wonach die Hydraulikpumpe, der Steuerblock und der Hydrauliktank an oder in der Lenkdeichsel angeordnet sind, bleiben diese auch bei einem Lenkeinschlag der Lenkdeichsel um das Drehlager relativ zueinander ortsfest ausgerichtet. Dies gilt dann natürlich auch für die Hydraulikleitungen zwischen diesen Bauteilen, wobei insbesondere die Verbindung zwischen der Hydraulikpumpe und dem Steuerblock durch eine Druckleitung und die Verbindung zwischen dem Hydrauliktank und der Hydraulikpumpe durch eine Saugleitung ausgebildet werden kann.

Im Rahmen der Erfindung kann die Hydraulikpumpe auf einer Unterseite, einer Oberseite oder im Inneren der Lenkdeichsel angeordnet werden. Bei einer Anordnung auf der Unter- oder Oberseite der Lenkdeichsel wird die Hydraulikpumpe zweckmäßigerweise durch ein Gehäuse (Umhausung) vor äußeren Einflüssen geschützt. Den besten Schutz und die kompakteste Anordnung bietet jedoch eine Platzierung der Hydraulikpumpe im Inneren der Lenkdeichsel. Gemäß einer bevorzugten Ausgestaltung der Erfindung wird der Hydrauliktank auf der Oberseite der Lenkdeichsel angeordnet und gemäß einer weiteren Ausgestaltung kann dann auch der Steuerblock auf dem Hydrauliktank befestigt werden. Die mit dem Hydrauliktank und dem Steuerblock in Verbindung stehende Hydraulikpumpe wird dann wahlweise auf der Unterseite der Lenkdeichsel oder im Inneren der Lenkdeichsel angeordnet.

Gemäß einer weiteren Ausgestaltung der Erfindung ist auf der Oberseite der Lenkdeichsel eine Plattform zum Stehen oder ein Sitz zum Sitzen einer Bedienperson zur Betätigung des Steuerblocks vorgesehen. Bei einer Anordnung der Steuerblocks auf dem Hydrauliktank befindet sich dieser für die Bedienperson auch gleich in der richtigen Höhe. Wird zudem die Plattform bzw. der Sitz an dem die Anhängerkupplung aufweisenden Ende der Lenkdeichsel und der Steuerblock an dem das Drehlager aufweisenden Ende der Lenkdeichsel angeordnet, ist die Bedienperson bei der Betätigung des Steuerblocks zum Anhänger hin ausgerichtet und hat somit einen guten Überblick über den Ladebereich und den Wirkbereich des Ladekrans. Um das Betreten der Plattform auf der Oberseite der Lenkdeichsel zu erleichtern kann an der Lenkdeichsel eine Trittstufe, beispielsweise in Form einer in eine Seitenwandung der Lenkdeichsel ausgebildeten Trittöffnung vorgesehen werden.

Das wenigstens eine hydraulisch betriebene Aggregat kann beispielsweise durch einen Forstkran und/oder Stützen zum Abstützen des Forstanhängers ausgebildet werden.

Gemäß einem weiteren Ausführungsbeispiel der Erfindung besteht auch die Möglichkeit, den Hydrauliktank im Inneren der Lenkdeichsel anzuordnen, da diese üblicherweise hohl ausgebildet ist und hierfür genügend Platz bieten würde. Bei einer Anordnung des Hydrauliktanks im Inneren der Lenkdeichsel würde es sich dann ggf. auch anbieten, die Hydraulikpumpe im Inneren der Lenkdeichsel und insbesondere im Inneren des Hydrauliktanks vorzusehen. Dadurch würde sich eine besonders platzsparende Anordnung ergeben. Die Gelenkwelle, mit der die Hydraulikpumpe mit der Zapfwelle eines Zugfahrzeugs verbunden wird, kann je nach Anordnung der Hydraulikpumpe oberhalb oder unterhalb der Anhängerkupplung verlaufen. Wird die Hydraulikpumpe im Inneren der Lenkdeichsel oder an der Unterseite der Lenkdeichsel angeordnet, würde die Gelenkwelle zweckmäßigerweise unterhalb der Anhängerkupplung verlaufen. Bei einer Anordnung der Hydraulikpumpe im Inneren der Lenkdeichsel käme aber auch ein Verlauf der Gelenkwelle oberhalb der Anhängerkupplung in Betracht. Diese Ausführung bietet sich natürlich insbesondere auch dann an, wenn die Hydraulikpumpe auf der Oberseite der Lenkdeichsel platziert wird.

Weitere Ausgestaltungen der Erfindung werden im Folgenden anhand der Beschreibung einiger Ausführungsbeispiele und der Zeichnung näher erläutert.

In der Zeichnung zeigen
- Fig. 1: eine schematische Seitenansicht eines Forstanhängers,
- Fig. 2: eine schematische Seitenansicht der Lenkdeichsel gemäß einem ersten Ausführungsbeispiel,
- Fig. 3: eine schematische Seitenansicht der Lenkdeichsel gemäß einem zweiten Ausführungsbeispiel,
- Fig. 4: eine schematische Seitenansicht der Lenkdeichsel gemäß einem dritten Ausführungsbeispiel und
- Fig. 5: eine schematische Darstellung des Hydraulikkreislaufs.

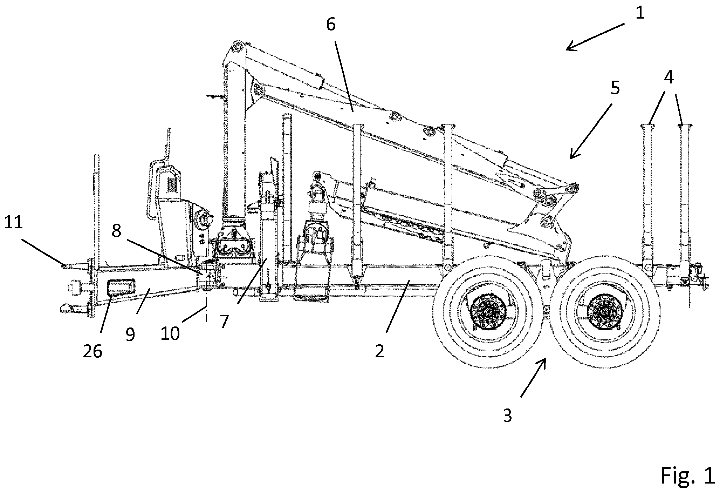

Der in Figur 1 dargestellte Forstanhänger 1 besteht im Wesentlichen aus einem Fahrzeugrahmen 2 mit einem Fahrwerk 3, einem durch mehrere Rungen 4 begrenzten Laderaum 5. Ferner ist am vorderen Ende des Fahrzeugrahmens 2 ein Ladekran 6 montiert, der hydraulisch betätigbar ist. Zum Abstützen des Forstanhängers im nichtangehängten Zustand oder auch beim Betrieb des Ladekrans sind Stützen 7 vorgesehen, die vorzugsweise auch hydraulisch betätigt werden können. Am vorderen Ende des Fahrzeugrahmens ist eine um ein Drehlager 8 schwenkbare Lenkdeichsel 9 angehängt. Das Drehlager 8 weist eine um eine Hochachse (vertikale Achse) ausgerichtete Drehachse 10 auf. Um die Lenkdeichsel 9 um die Drehachse 10 relativ zum Fahrzeugrahmen 2 zu verschwenken, ist wenigstens ein hydraulisch betätigbarer Zylinder vorgesehen, der hier jedoch nicht näher dargestellt ist.

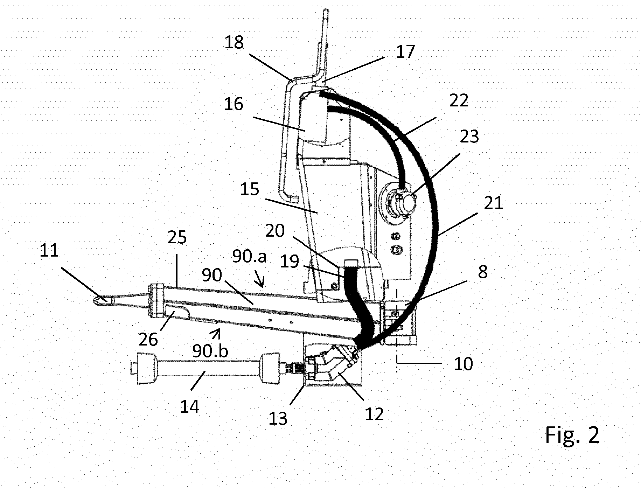

Anhand der Figuren 2 bis 4 werden im Folgenden drei verschiedene Ausgestaltungen (90, 91, 92) der Lenkdeichsel beschrieben.

Figur 2 zeigt ein erstes Ausführungsbeispiel einer Lenkdeichsel 90, die sich von einer Anhängerkupplung 11 bis zum Drehlager 8 erstreckt. Auf der Unterseite 90.b der Lenkdeichsel 90 ist eine Hydraulikpumpe 12 angeordnet, die durch ein umgebendes Gehäuse 13 geschützt ist. Die Hydraulikpumpe 12 steht mit einer Gelenkwelle 14 in Verbindung, die mit einem Zugfahrzeug, insbesondere über dessen Zapfwelle, koppelbar ist. Auf der Oberseite 90a der Lenkdeichsel 90 ist ein Hydrauliktank 15 montiert, auf dem wiederum ein Steuerblock 16 befestigt ist. Der Steuerblock 16 sieht Bedienhebel 17 vor, mit denen sich der Ladekran 6 und ggf. auch die Stützen 7 steuern lassen. Der Steuerblock 16 und der Hydrauliktank 15 sind zudem über ein Schutzgestänge 18 vor äußeren Einwirkungen, wie herabfallenden Ästen oder dergleichen, geschützt.

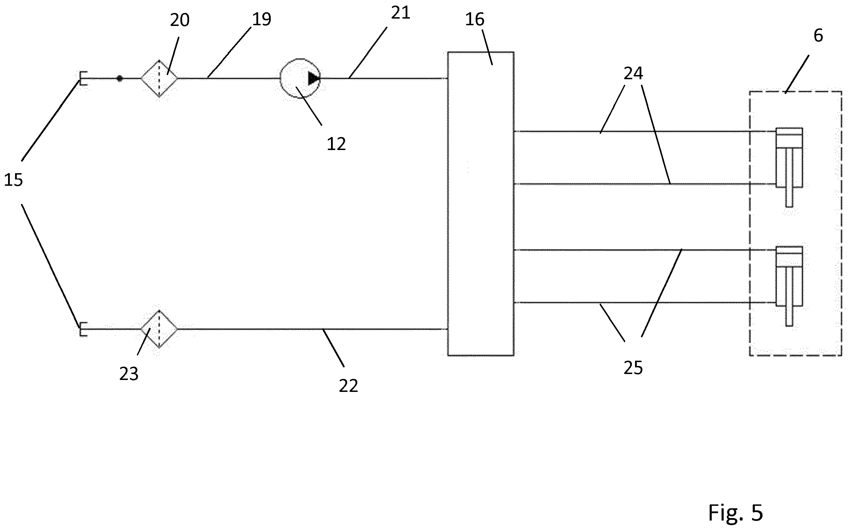

Der Hydraulikkreislauf ist aus der schematischen Darstellung gemäß Fig. 5 ersichtlich. Dabei steht die Hydraulikpumpe 12 über eine Saugleitung 19 und einen Saugfilter 20 mit dem Öltank 15 und über eine Druckleitung 21 mit dem Steuerblock 16 in Verbindung. Der Steuerblock 16 ist wiederum über eine Rücklaufleitung 22 und einen Rücklauffilter 23 mit dem Hydrauliktank verbunden. Zur Steuerung des hydraulisch betriebenen Aggregats (Ladekran 6) sind zwischen Steuerblock 16 und dem hydraulisch betriebenen Aggregat Hydraulikleitungen 24, 25 vorgesehen.

Der Hydrauliktank 15 mit dem darauf angeordneten Steuerblock 16 ist auf der Oberseite 90a der Lenkdeichsel 90 an dem das Drehlager 8 aufweisenden Ende angeordnet. Der vordere Bereich, also der Bereich, welcher der Anhängerkupplung 11 zugewandt ist, kann daher auf der Oberseite 90a der Lenkdeichsel 90 eine Plattform 25 zum Stehen einer Bedienperson aufweisen. Alternativ kann in diesem Bereich aber auch ein Sitz zum Sitzen einer Bedienperson vorgesehen werden. Um das Besteigen der Plattform zu erleichtern, ist in einer Seitenwandung der Lenkdeichsel 19 eine Trittöffnung 26 vorgesehen.

Die Anhängerkupplung 11 ist im dargestellten Ausführungsbeispiel der Fig. 2 als Zugöse ausgebildet, kann aber auch durch jede andere geeignete Kupplung, wie beispielsweise ein Kugelmaul, ausgebildet werden. In Figur 1 sind beide Varianten dargestellt, wenngleich in der Praxis nur eine der beiden Kupplungsmöglichkeiten montiert sein wird.

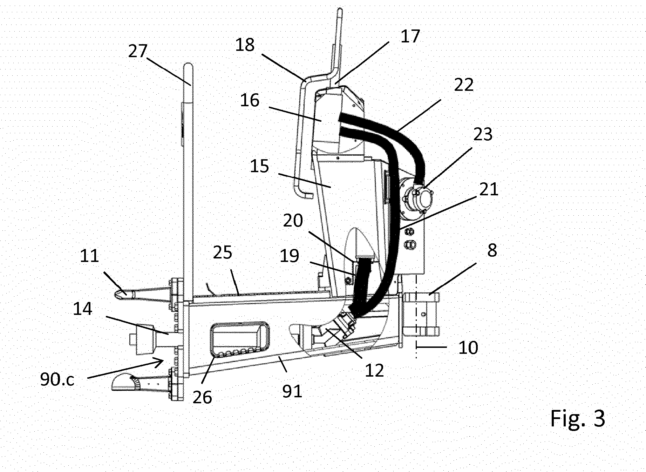

Die in Figur 3 dargestellte Lenkdeichsel 91 unterscheidet sich vom Ausführungsbeispiel gemäß Figur 2 lediglich dadurch, dass die Hydraulikpumpe 12 im Inneren der Lenkdeichsel 91 angeordnet ist. Ansonsten stimmt die Anordnung des Hydrauliktanks 15 und des Steuerblocks mit dem vorhergehenden Ausführungsbeispiel überein. Die Anordnung der Hydraulikpumpe 12 im Inneren der Lenkdeichsel 91 bedingt, dass die Gelenkwelle 14 über eine Öffnung 90c im Bereich der Stirnseite in die Lenkdeichsel 91 hineinragt und dort mit der Hydraulikpumpe gekoppelt ist.

Bei dieser Ausführung kann die Anhängerkupplung 11 wahlweise oberhalb oder unterhalb der Gelenkwelle 4 an der Lenkdeichsel 91 befestigt werden. Hierfür bietet sich insbesondere eine Ausgestaltung der Zugdeichsel mit einer Anschlussplatte und einem Kupplungselement an, wie dies beispielsweise in der älteren Patentanmeldung DE 10 2017 126 711 A1 näher beschrieben ist. In Figur 3 ist sowohl eine oberhalb der Gelenkwelle 14 angeordnete Zugöse als auch eine unterhalb der Gelenkwelle 14 angeordnete Maulkupplung dargestellt, wobei im praktischen Gebrauch zweckmäßigerweise nur eine der beiden Kupplungsmöglichkeiten montiert sein wird. Damit die auf der Plattform 25 stehende Bedienperson nicht versehentlich rückwärts in den Bereich zwischen Zugfahrzeug und Forstanhänger fällt, kann am vorderen Ende der Lenkdeichsel 91 ein Abstützrahmen 27 vorgesehen werden.

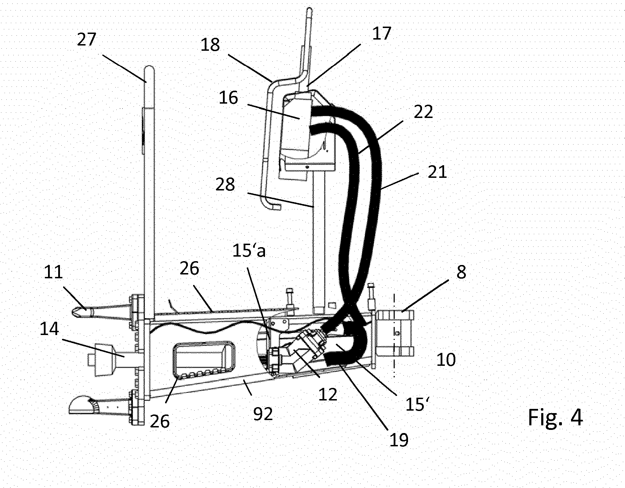

Figur 4 zeigt ein weiteres Ausführungsbeispiel einer Lenkdeichsel 92, bei der die Hydraulikpumpe 12 im Inneren der Lenkdeichsel 92 angeordnet ist. Hier befindet sich zudem auch der Hydrauliktank 15' im Inneren der Lenkdeichsel 92. Die weitere Besonderheit besteht dabei darin, dass die Hydraulikpumpe 12 im Inneren des Hydrauliktanks 15' angeordnet ist. Hierzu wird die Hydraulikpumpe 12 zweckmäßigerweise an der dem vorderen Ende der Lenkdeichsel 92 zugewandten Stirnfläche 15'a des Hydrauliktanks 15' angeordnet, damit die Ankopplung an die Gelenkwelle 14 auf einfache Weise erfolgen kann. Die Saugleitung 19 kann dann entsprechend kurz ausgebildet werden. Der Steuerblock 16 wird dann auf einer Säule 28 montiert, damit sich die Bedienhebel 17 in einer für die Bedienperson günstigen Höhe befinden.

Bei allen drei Ausführungsbeispielen befinden sich die Hydraulikpumpe 12, der Steuerblock 16 und der Hydrauliktank 15, 15' an oder in der Lenkdeichsel. Dadurch sind diese Bauteile auch bei einem Lenkeinschlag der Lenkdeichsel 90, 91, 92 um die Drehachse 10 relativ zueinander ortsfest angeordnet. Die Saugleitung 19, die Druckleitung 21 und die Rücklaufleitung 22 sind somit keinen Bewegungen durch einen etwaigen Lenkeinschlag der Lenkdeichsel ausgesetzt und sind daher bezüglich etwaiger Beschädigungen weniger anfällig. Dadurch kann auch das Intervall für den Austausch dieser Leitungen entsprechend verlängert werden. Wenngleich für diese Leitungen weiterhin flexibel Hydraulikleitungen eingesetzt werden können, könnte auch die ein oder andere Leitung als starre Rohrleitung ausgeführt werden.

## Patentansprüche

1. Forstanhänger (1) mit
- einer sich von einer Anhängerkupplung (11) bis zu einem Drehlager (8) erstreckenden Lenkdeichsel (9),
- einer über eine Gelenkwelle (14) mit einem Zugfahrzeug koppelbaren Hydraulikpumpe (12),
- einem Steuerblock (16) zur Steuerung wenigstens eines hydraulisch betriebenen Aggregats und
- einem mit der Hydraulikpumpe (12) und dem Steuerblock (16) in Verbindung stehenden Hydrauliktank (15, 15'),
**dadurch gekennzeichnet, dass**
die Hydraulikpumpe (12), der Steuerblock (16) und der Hydrauliktank (15, 15') an oder in der Lenkdeichsel (9) angeordnet sind, sodass die Hydraulikpumpe (12), der Steuerblock (16) und der Hydrauliktank (15, 15') auch bei einem Lenkeinschlag der Lenkdeichsel (9) um das Drehlager (8) relativ zueinander ortsfest angeordnet sind.

2. Forstanhänger (1) nach Anspruch 1, **dadurch gekennzeichnet, dass** die Verbindung zwischen der Hydraulikpumpe (12) und dem Steuerblock (16) durch eine Druckleitung (21) und die Verbindung zwischen dem Hydrauliktank (15, 15') und der Hydraulikpumpe (12) durch eine Saugleitung (19) gebildet wird.

3. Forstanhänger (1) nach Anspruch 1, **dadurch gekennzeichnet, dass** der Hydrauliktank (15) auf einer Oberseite der Lenkdeichsel (90, 91) angeordnet ist.

4. Forstanhänger (1) nach Anspruch 3 **dadurch gekennzeichnet, dass** der Steuerblock (16) auf dem Hydrauliktank (15) befestigt ist.

5. Forstanhänger (1) nach Anspruch 1, **dadurch gekennzeichnet, dass** auf einer Oberseite der Lenkdeichsel (9) eine Plattform (25) zum Stehen oder ein Sitz zum Sitzen einer Bedienperson zur Betätigung des Steuerblocks (16) vorgesehen ist.

6. Forstanhänger (1) nach Anspruch 5, **dadurch gekennzeichnet, dass** die Lenkdeichsel (9) wenigstens eine Seitenwandung aufweist, die eine Trittöffnung (26) zum Besteigen der Plattform (25) aufweist.

7. Forstanhänger (1) nach Anspruch 5, **dadurch gekennzeichnet, dass** die Plattform (25) an einem die Anhängerkupplung (11) aufweisenden Ende der Lenkdeichsel (9) und der Steuerblock (16) an einem das Drehlager (8) aufweisenden Ende der Lenkdeichsel (9) angeordnet sind.

8. Forstanhänger (1) nach Anspruch 1, **dadurch gekennzeichnet, dass** die Hydraulikpumpe (12) auf einer Unterseite, einer Oberseite oder im Inneren der Lenkdeichsel (9) angeordnet ist.

9. Forstanhänger (1) nach Anspruch 1, **dadurch gekennzeichnet, dass** der Hydrauliktank (15') im Inneren der Lenkdeichsel (92) angeordnet ist.

10. Forstanhänger (1) nach Anspruch 1, **dadurch gekennzeichnet, dass** im Inneren der Lenkdeichsel (92) wenigstens ein Hohlraum angeordnet ist, der den Hydrauliktank (15') bildet und die Hydraulikpumpe (12) im Inneren des Hohlraums angeordnet ist.

11. Forstanhänger (1) nach Anspruch 1, **dadurch gekennzeichnet, dass** das wenigstens eine hydraulisch betriebene Aggregat durch einen Forstkran (6) und/oder Stützen (7) zum Abstützen des Forstanhängers (1) gebildet wird.

12. Forstanhänger (1) nach Anspruch 1, **dadurch gekennzeichnet, dass** das die Gelenkwelle (14) oberhalb oder unterhalb der Anhängerkupplung (11) angeordnet ist.

## Claims

1. Forestry trailer (1) comprising
- a steering drawbar (9) extending from a trailer coupling (11) to a pivot bearing (8),
- a hydraulic pump (12) which can be coupled to a towing vehicle via a cardan shaft (14),
- a control block (16) for controlling at least one hydraulically operated unit, and
- a hydraulic tank (15, 15') which is connected to the hydraulic pump (12) and the control block (16),
**characterized in that**
the hydraulic pump (12), the control block (16) and the hydraulic tank (15, 15') are arranged on or in the steering drawbar (9), such that the hydraulic pump (12), the control block (16) and the hydraulic tank (15, 15') are arranged so as to be stationary relative to one another even when the steering drawbar (9) is at a steering angle about the pivot bearing (8).

2. Forestry trailer (1) according to claim 1, **characterized in that** the connection between the hydraulic pump (12) and the control block (16) is formed by a pressure line (21) and the connection between the hydraulic tank (15, 15') and the hydraulic pump (12) is formed by a suction line (19).

3. Forestry trailer (1) according to claim 1, **characterized in that** the hydraulic tank (15) is arranged on an upper face of the steering drawbar (90, 91).

4. Forestry trailer (1) according to claim 3, **characterized in that** the control block (16) is attached to the hydraulic tank (15).

5. Forestry trailer (1) according to claim 1, **characterized in that** a platform (25) for standing or a seat for sitting is provided on an upper face of the steering drawbar (9) for an operator for operating the control block (16).

6. Forestry trailer (1) according to claim 5, **characterized in that** the steering drawbar (9) has at least one lateral wall which has a step opening (26) for climbing onto the platform (25).

7. Forestry trailer (1) according to claim 5, **characterized in that** the platform (25) is arranged on an end of the steering drawbar (9) that has the trailer coupling (11) and the control block (16) is arranged on an end of the steering drawbar (9) that has the pivot bearing (8).

8. Forestry trailer (1) according to claim 1, **characterized in that** the hydraulic pump (12) is arranged on a lower face, an upper face or in the interior of the steering drawbar (9).

9. Forestry trailer (1) according to claim 1, **characterized in that** the hydraulic tank (15') is arranged in the interior of the steering drawbar (92).

10. Forestry trailer (1) according to claim 1, **characterized in that** at least one cavity is arranged in the interior of the steering drawbar (92), which cavity forms the hydraulic tank (15'), and the hydraulic pump (12) is arranged in the interior of the cavity.

11. Forestry trailer (1) according to claim 1, **characterized in that** the at least one hydraulically operated unit is formed by a forestry crane (6) and/or supports (7) for supporting the forestry trailer (1).

12. Forestry trailer (1) according to claim 1, **characterized in that** the cardan shaft (14) is arranged above or below the trailer coupling (11).

## Revendications

1. Remorque forestière (1) comprenant :
- un timon de direction (9) s'étendant depuis un attelage de remorque (11) jusqu'à un palier de pivot (8),
- une pompe hydraulique (12) pouvant être accouplée à un véhicule tracteur, par un arbre articulé (14),
- un bloc de commande (16) conçu pour la commande d'au moins un ensemble actionné hydrauliquement et
- un réservoir hydraulique (15, 15') se trouvant en liaison avec la pompe hydraulique (12) et avec le bloc de commande (16),
**caractérisée**
**en ce que** la pompe hydraulique (12), le bloc de commande (16) et le réservoir hydraulique (15, 15') sont disposés sur ou dans le timon de direction (9), de sorte que la pompe hydraulique (12), le bloc de commande (16) et le réservoir hydraulique (15, 15') sont disposés en étant fixes les uns par rapport aux autres, également lors d'un braquage du timon de direction (9) autour du palier de pivot (8).

2. Remorque forestière (1) selon la revendication 1, **caractérisée en ce que** la liaison entre la pompe hydraulique (12) et le bloc de commande (16) est formée par une conduite de pression (21), la liaison entre le réservoir hydraulique (15, 15') et la pompe hydraulique (12) étant formée par une conduite d'aspiration (19).

3. Remorque forestière (1) selon la revendication 1, **caractérisée en ce que** le réservoir hydraulique (15) est disposé sur une partie supérieure du timon de direction (90, 91).

4. Remorque forestière (1) selon la revendication 3, **caractérisée en ce que** le bloc de commande (16) est fixé sur le réservoir hydraulique (15).

5. Remorque forestière (1) selon la revendication 1, **caractérisée en ce qu'**il est prévu, sur une partie supérieure du timon de direction (9), une plateforme (25) pour se tenir debout, ou bien un siège permettant à un opérateur de s'asseoir, ledit opérateur faisant fonctionner le bloc de commande (16).

6. Remorque forestière (1) selon la revendication 5, **caractérisée en ce que** le timon de direction (9) présente au moins une paroi latérale qui comporte une ouverture de marchepied (26) servant à monter sur la plateforme (25).

7. Remorque forestière (1) selon la revendication 5, **caractérisée en ce que** la plateforme (25) est disposée au niveau d'une extrémité du timon de direction (9), ladite extrémité présentant l'attelage de remorque (11), le bloc de commande (16) étant disposé au niveau d'une extrémité du timon de direction (9), ladite extrémité présentant le palier de pivot (8).

8. Remorque forestière (1) selon la revendication 1, **caractérisée en ce que** la pompe hydraulique (12) est disposée sur une partie inférieure, sur une partie supérieure ou à l'intérieur du timon de direction (9).

9. Remorque forestière (1) selon la revendication 1, **caractérisée en ce que** le réservoir hydraulique (15') est disposé à l'intérieur du timon de direction (92).

10. Remorque forestière (1) selon la revendication 1, **caractérisée en ce qu'**au moins un espace creux est disposé à l'intérieur du timon de direction (92), lequel espace creux forme le réservoir hydraulique (15'), et la pompe hydraulique (12) est disposée à l'intérieur de l'espace creux.

11. Remorque forestière (1) selon la revendication 1, **caractérisée en ce que** l'ensemble actionné hydrauliquement au moins au nombre de un est formé par une grue forestière (6) et/ou par des supports (7) servant à soutenir la remorque forestière (1).

12. Remorque forestière (1) selon la revendication 1, **caractérisée en ce que** l'arbre articulé (14) est disposé au-dessus ou au-dessous de l'attelage de remorque (11).
